# FASCICULE DE BREVET EUROPEEN

(11) **EP 2 803 523 B1**
(45) Date de publication et mention de la délivrance du brevet: **27.11.2019**
(21) Numéro de dépôt: 14167863.1
(22) Date de dépôt: 12.05.2014
(51) Int. Cl.: G06Q 50/30, H02J 7/00, B60L 3/12, B60L 53/63, B60L 53/30, H02J 7/04, B60L 53/65, G06Q 10/06

(54) **Procédé de gestion dynamique et prévisionnel du rechargement électrique de batteries**
Dynamisches und vorausschauendes Verwaltungsverfahren der elektrischen Aufladung von Batterien
Method for dynamic and predictive management of the electrical recharging of batteries

(30) Priorité: 16.05.2013 FR 1354390
(43) Date de publication de la demande: 19.11.2014
(73) Titulaire: Parknplug, 10120 Saint-André-Les-Vergers (FR)
(72) Inventeur: Toggenburger, Pascal, 10440 LA RIVIERE DE CORPS (FR)
(74) Mandataire: Rhein, Alain

(56) Documents cités:
- WO-A1-2011/118193
- WO-A2-2009/052447
- ES-A2- 2 424 592
- JP-A- 2012 010 534
- JP-A- 2012 165 599
- US-A1- 2008 284 379
- US-A1- 2011 193 522
- US-A1- 2012 245 750

## Description

La présente invention entre dans le domaine de la gestion dynamique du rechargement électrique de batteries.

L'invention concerne particulièrement un système de gestion dynamique et prévisionnel du rechargement électrique de batteries, en particulier son procédé de mise en œuvre.

Un tel système trouvera une application particulière dans la gestion du rechargement de batteries d'un parc de véhicules, en particulier de véhicules équipés d'une motorisation électrique ou hybride.

On notera que ces véhicules peuvent consister, préférentiellement mais non limitativement, en des véhicules terrestres, tels des automobiles, des motos ou scooters, mais aussi éventuellement en des véhicules maritimes ou fluviaux, comme des bateaux, voir ariens, comme des aéronefs.

Actuellement, les utilisateurs des véhicules électriques effectuent le rechargement de leur batterie par connexion à partir d'un point unique d'alimentation situé sur un site. Ce rechargement a lieu pendant une période durant laquelle chaque véhicule est parqué, immobilisé pendant la durée nécessaire pour un rechargement total ou partiel des batteries, de manière à atteindre une autonomie maximale. Cette période de rechargement peut avoir lieu la nuit, au domicile de l'utilisateur, ou bien en journée sur son lieu de travail.

De nombreux problèmes se posent en raison du nombre de véhicules à recharger en rapport avec la puissance du point d'alimentation dudit site. Il est difficile d'adapter cette puissance à un nombre de véhicules susceptibles de varier, de diminuer mais plus certainement d'augmenter au fil du temps à moyen ou à long terme. Pour ces raisons de surcoûts d'installation et de fonctionnement, il est difficile d'envisager une puissance surdimensionnée du point de livraison en prévision de l'avenir, alors qu'une puissance moindre pourrait être suffisante.

Dès lors, un point de rechargement est susceptible de se retrouver surchargé, voire de disjoncter, étant donné que le chargement des véhicules s'effectue simultanément sur une même période, à savoir principalement les périodes d'heures creuses. En contrepartie, étant donné les durées de rechargement nécessaires, il n'est pas possible d'envisager le rechargement successivement de tous les véhicules par rapport à une durée d'immobilisation trop courte.

Il est donc nécessaire de gérer un échéancier de rechargement des batteries d'un parc de véhicules électriques.

Pour ce faire, il a déjà été imagé, au travers du document EP 2 219 278, de vérifier l'état de charge de chaque batterie et d'en déduire un ordre de rechargement des véhicules en fonction de cet état de charge et par rapport à la puissance disponible au point d'alimentation. De plus, cette solution estime une consommation potentielle future à partir de l'état de chargement actuel de chaque batterie. En somme, un niveau de charge minimal à atteindre est calculé en fonction du déchargement constaté de la batterie. Le début de la prochaine utilisation, correspondant au départ du véhicule et à l'arrêt provoqué du rechargement, entre aussi en considération. A partir de tous ces paramètres, est automatiquement calculé un planning du rechargement simultané et successif de tous les véhicules.

Si cette solution permet d'ordonnancer le rechargement de plusieurs véhicules, il n'apporte toutefois pas satisfaction en raison de l'aspect estimatif du niveau de rechargement à atteindre. En effet, un utilisateur peut utiliser en semaine son véhicule pour se rendre sur son lieu de travail, entrainant une consommation journalière régulière, mais ne pas s'en servir en fin de semaine, les samedi et dimanche. Il sera alors seulement nécessaire d'envisager son rechargement avant le lundi matin. A l'inverse, un utilisateur peut avoir besoin de son véhicule le week-end pour des trajets plus importants alors qu'il l'utilise moins en semaine. Une infinité de possibilité peuvent être envisagées, lesquelles ne permettent pas d'obtenir un niveau de charge minimum adapté au prochain trajet du véhicule, ou bien d'optimiser au mieux le rechargement et la quantité d'électricité consommée.

De plus, une telle solution doit nécessairement communiquer avec le système de gestion électrique du véhicule, afin de récupérer des informations. Etant donné les disparités existantes entre deux constructeurs, ainsi que les puissances de chaque batterie pour un véhicule donné, ladite solution doit intégrer des moyens de communication offrant une telle compatibilité, ce qui la rend plus complexe à concevoir et à mettre en œuvre. Dès lors, en réalité, cette solution ne permet de gérer l'échéancier de rechargement que de véhicules d'un même constructeur.

Une solution alternative est décrite dans le document US 2011/193522, visant un système de gestion de l'affluence et de l'accès par un utilisateur à un réseau de stations de rechargement, chaque station était équipée d'une ou plusieurs bornes, à savoir plusieurs points d'alimentation au sens de la présente invention. Le but est ici d'informer à distance un utilisateur de la disponibilité d'une borne de rechargement, puis de lui permettre de réserver une plage horaire auprès d'une borne disponible, la même ou une borne située à proximité dans une même zone géographique.

Pour ce faire, un tel système indique, sur requête d'un utilisateur, le planning de rechargement d'une ou plusieurs stations, en indiquant le temps de charge le plus court restant avant qu'une desdites station se libère et soit vacante, permettant alors à l'utilisateur d'envisager le rechargement de son véhicule à ce moment. L'utilisateur doit alors réserver une plage horaire de rechargement, en indiquant ou non la durée de rechargement qu'il souhaite. Une fois réservée, l'utilisateur doit se rendre sur place en vue du rechargement.

On notera que ce document prévoit d'identifier le véhicule, afin de savoir s'il a déjà été rechargé auparavant, se servant de la durée antérieure de rechargement enregistrée au niveau d'un serveur gérant à distance l'intégralité des sites.

Il s'agit donc d'une simple gestion d'un agenda, indiquant quand et pour combien de temps une station est libre, pour une durée déterminée, à savoir sur la base d'une durée de rechargement déjà effectuée par un utilisateur identifié dans le système. En d'autres termes, ledit système consulte la durée de rechargement passée d'un utilisateur pour servir de base à la durée de la plage horaire minimum qu'il souhaite réserver, que ledit système compare avec les plages temporelles de disponibilité des bornes.

Un tel système ne prend pas aucunement en considération les horaires de rechargement passés, mais uniquement la durée antérieure, pour définir et trouver un intervalle de temps au moins égal pour permettre le rechargement du véhicule, ledit intervalle correspondant à ladite durée de rechargement enregistrée préalablement au niveau dudit serveur.

Plus précisément, dans ce système, l'affectation s'effectue par empilement, similaire à une pile de type FIFO pour « First In First Out ». En d'autres termes, pour une station donnée, un utilisateur doit attendre la fin des rechargements préalables, pour pouvoir réserver le prochain créneau disponible en vue d'effectuer son propre rechargement.

Cette solution ne considère aucunement le calcul du moment optimal pour le rechargement de plusieurs véhicules en fonction du comportement de chaque utilisateur. Une telle gestion d'agenda ne prend pas en compte un utilisateur qui arrive plus tôt et doit théoriquement repartir plus tard, par rapport à un autre utilisateur qui arriverait plus tard mais devrait théoriquement repartir plus tôt. Le but est uniquement de se faire succéder les durées de rechargement dans un agenda, sans possibilité de les faire se recouvrir, ni prendre en considération explicitement la puissance électrique des bornes. De plus, il n'y a aucune optimisation du système pour s'approcher au plus près de la limite de puissance nominale de chaque point d'alimentation.

Le document WO2009/052447A2 décrit un procédé de gestion dynamique et prévisionnel du rechargement électrique de batteries ne mentionnant pas la définition de l'instant de fin d'alimentation après un laps de temps prédéfini suivant l'arrêt de consommation d'électricité desdites batteries.

Le document JP2012165599A décrit un procédé de contrôle de charge avec estimation de temps de charge.

La présente invention a pour but de pallier les inconvénients de l'état de la technique, en proposant un système de gestion dynamique et prévisionnel du rechargement électrique de batteries, au travers de son procédé de mise en œuvre.

Un tel système se veut à même d'effectuer une gestion intelligente du rechargement des batteries de tout type de véhicule, sans distinction de sa provenance, du type de batterie qu'il embarque ou de son niveau de charge actuel ou à atteindre. L'invention permet donc de s'affranchir des données liées aux véhicules à recharger.

Pour ce faire, un tel système de gestion envisage uniquement d'enregistrer la simple consommation électrique sur une plage temporelle donnée pour chaque véhicule, lors de chaque rechargement. Lorsque ce même véhicule est rechargé de nouveau, alors le système récupère les informations précédemment enregistrées pour savoir combien de temps le véhicule devrait être immobilisé et qu'elle consommation électrique lui est nécessaire.

En somme, ledit système stocke des données relatives aux habitudes de charge de chaque véhicule, les analyse, pour en déduire automatiquement un prévisionnel de rechargement dudit véhicule. En regroupant tous les prévisionnels liés au parc de véhicule, l'invention détermine au moins une période de rechargement de chaque véhicule et un échéancier de toutes les périodes de rechargement de l'ensemble du parc de véhicules.

En particulier, l'invention prévoit de déterminer une période de rechargement à partir d'informations provenant d'une durée de rechargement préalablement effectuée, mais surtout de son horaire de début et de son horaire de fin. En d'autres termes, l'invention envisage de compulser les habitudes des utilisateurs, pour ordonner le rechargement de leur véhicule. Une telle solution permet de mettre en premier le rechargement d'un utilisateur arrivé plus tard au point de rechargement, mais qui doit repartir plus tôt qu'un autre utilisateur qui serait arrivé plus tôt, mais dont l'horaire de départ est plus tard.

Ainsi, l'invention tente d'agencer au mieux les plages de rechargement des véhicules, pour qu'elles se succèdent et se chevauchent, de sorte que, si possible, l'ensemble des durées de rechargement soient moins longues que les durées additionnées.

De plus, l'invention cherche à optimiser le rechargement, en s'approchant du plus près de la limite de la puissance du point d'alimentation. En effet, l'invention vise spécifique un unique point de rechargement, auquel se connectent électriquement plusieurs véhicules.

Du fait de son caractère dynamique, ledit système peut enregistrer les modifications du comportement de chaque véhicule et amender son échéancier en conséquence, lui conférant un caractère d'apprentissage des évolutions des habitudes des utilisateurs.

A ce titre, la reconnaissance de chaque véhicule est rendue possible grâce à l'identification de son utilisateur, au moment de la connexion du véhicule au point de rechargement. En effet, afin d'autoriser le rechargement d'un véhicule, son utilisateur doit s'identifier, notamment à l'aide d'un badge personnel, par exemple nominatif. Dès lors, il est obligé de s'identifier, préalablement au rechargement, pour que sa consommation électrique soit enregistrée au niveau de son compte et lui soit facturée. C'est ainsi que l'invention prévoit aisément d'associer un véhicule à un utilisateur et de reconnaître un véhicule à chacune de ses connexions en vue de son rechargement.

Pour ce faire est proposé un procédé selon la revendication 1.

Du fait de son mode de gestion, par superposition des plages de rechargement de plusieurs véhicules, en fonction de la puissance du point d'alimentation, l'invention vise une mise en œuvre pour la gestion d'au moins trois véhicules. Son efficacité sera d'autant plus optimisée pour la gestion d'un parc d'une dizaine, voire davantage, de véhicules.

De plus, ce procédé consiste à déterminer un planning de rechargement de plusieurs véhicules en ordonnançant les durées prévisionnelles de rechargement déterminées pour chaque batterie.

Préférentiellement, l'ordonnancement dudit planning peut être réalisé par calcul des puissances électriques nécessaires au rechargement de chaque batterie sur sa durée prévisionnelle de rechargement, de sorte qu'à tout moment, le cumul desdites puissance n'excède pas la puissance nominale dudit point d'alimentation.

Ledit procédé consiste, lors du rechargement d'une batterie, à définir l'instant de fin d'alimentation après un laps de temps prédéfini suivant l'arrêt de consommation d'électricité par ladite batterie.

Selon un autre mode de réalisation, l'identification dudit utilisateur peut consister en son authentification et à relier ses informations personnelles audit enregistrement de données.

Une particularité réside dans le fait que c'est au moment de connecter électriquement le véhicule, localement sur le site, que le système selon l'invention intervient, et non sur une requête préalable d'un utilisateur, réalisée à distance.

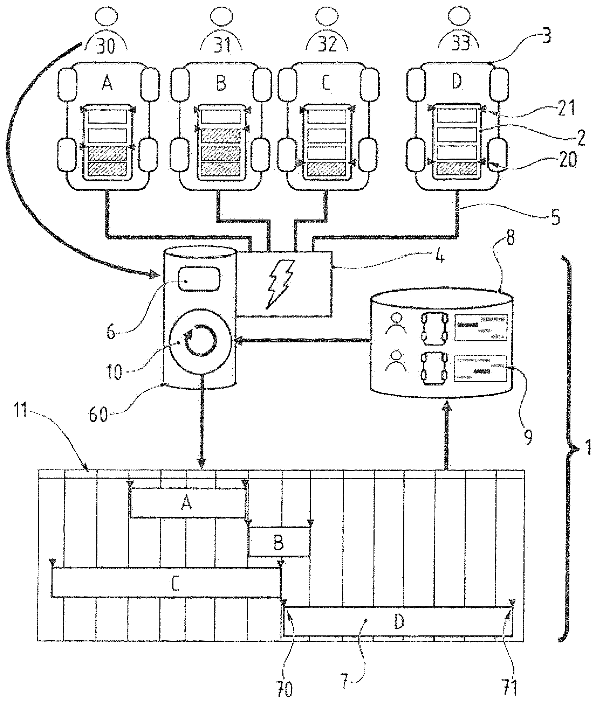

D'autres caractéristiques et avantages de l'invention ressortiront de la description détaillée qui va suivre des modes de réalisation non limitatifs de l'invention, en référence à la figure annexée, représentant schématiquement l'architecture d'un exemple précis de mise en œuvre du système selon l'invention.

La présente invention concerne un procédé 1 de gestion dynamique et prévisionnel du rechargement électrique de batteries 2.

On notera que chaque batterie 2 consiste en des moyens de stockage d'énergie électrique, notamment sous forme d'accumulateur électrochimique. Au moins une batterie 2, de préférence plusieurs, est destinée à équiper un véhicule 3, notamment une automobile.

Chaque batterie 2 est prévue rechargeable. En vue de ce rechargement, ladite batterie 2 doit être connectée à un point d'alimentation 4. Ce dernier est unique au sens de la présente invention. En d'autres termes, il s'agit d'un point localisé sur un seul site, pourvu de plusieurs prises d'alimentations auxquelles peuvent être connectés et reliés électriquement des véhicules.

Ledit point d'alimentation 4 est connecté et relié électriquement à un réseau de distribution et d'approvisionnement en énergie électrique. Ainsi, il est nécessaire de parquer chaque véhicule 3 à proximité dudit point d'alimentation 4, en vue d'y connecté sa batterie 2, notamment par l'intermédiaire d'une ligne, tel un câble d'alimentation 5, équipé d'une connectique adaptée, venant coopérer avec une connectique complémentaire située au niveau dudit point 4, notamment sous forme de prises ou de fiches électriques.

En outre, ledit point d'alimentation 4 présente une puissance nominale, notamment suivant un ampérage donné, qu'il ne peut pas dépasser, sans risque de disjoncter, voire de se dégrader. Cette limitation empêche le rechargement d'un nombre trop important de batteries 2 simultanément. Une fois connectée et approvisionnée en électricité par le point 4, chaque batterie 2 peut se recharger pendant une durée donnée, dépendant de son état ou niveau actuel de charge 20. Cette durée est aussi dépendante de la vitesse de rechargement de chaque batterie 2, diminuant au fil du temps et en fonction du nombre de rechargements déjà effectués. De plus, la durée du rechargement est limitée dans le temps, jusqu'à ce que l'utilisateur provoque à un instant donné la déconnexion du point d'alimentation 4, lorsqu'il doit reprendre son véhicule 3, ou bien une fois que la batterie a atteint son niveau de charge maximum 21.

Par ailleurs, chaque batterie 2 est embarquée au sein d'un véhicule 3 qui appartient à un utilisateur 30. Selon l'exemple de réalisation représenté sur la figure, quatre véhicules A, B, C et D appartiennent réciproquement à quatre utilisateurs différents 30, 31, 32 et 33.

De plus, chaque utilisateur est détenteur d'un contrat d'utilisation du système de recharge passé auprès du propriétaire de l'infrastructure de recharge approvisionnant en électricité le point d'alimentation 4. Lors du rechargement de son véhicule 3, ce dernier et/ou un utilisateur doit donc être identifié auprès du point d'approvisionnement 4, afin que la consommation électrique du rechargement de sa batterie 2 lui soit imputée et facturée.

A ce titre, le système de gestion selon l'invention comprend des moyens 6 d'identification 6 chaque utilisateur et/ou de chaque véhicule 3. Ces moyens d'identification 6 se situent préférentiellement au niveau dudit point d'approvisionnement 4, notamment sous la forme d'une borne d'accès 60.

Selon un mode de réalisation, ces moyens d'identification 6 peuvent comprendre des moyens d'authentification de chaque utilisateur, notamment sous la forme d'un lecteur de carte personnelle audit utilisateur. Cette carte peut se présenter sous la forme d'un badge, équipé d'une technologie de communication avec ou sans contact, notamment d'une puce RFID (pour « Radio Frequency IDentification »). De plus, ce badge intègre une clef unique d'identification, servant d'identifiant propre audit badge et, ainsi, audit utilisateur. Cette clef est transmise vers les moyens d'identification 6 qui vérifie sa validité, afin d'autoriser ou non le rechargement.

Selon un mode spécifique de réalisation, cette identification peut aussi comprendre une étape de saisie, à l'aide de moyens de saisie, tel un clavier, d'un mot de passe personnel à chaque utilisateur.

Selon un autre mode de réalisation, ces moyens d'authentification peuvent se présenter sous la forme d'application logicielle embarquée, notamment au niveau d'un terminal portable personnel audit utilisateur. L'authentification de l'utilisateur s'effectue donc à distance, par l'intermédiaire d'un réseau de communication sans fil, relié à ladite borne 60 et aux moyens d'identification. Ainsi, il est possible pour un utilisateur s'identifier à distance auprès des moyens d'identification 6, pouvant alors s'affranchir d'une borne physique 60.

Selon encore un autre mode de réalisation, l'identification peut s'effectuer directement par le branchement dudit véhicule 3, dont les moyens de raccordement électrique, comme la prise équipant ledit câble 5, peuvent être pourvus d'informations d'identification, comme un numéro de série. Ces informations seront alors validées par les moyens d'identification, notamment au travers d'une comparaison avec une base de données distantes, afin d'authentification ledit véhicule 3 ainsi connecté et autoriser son rechargement.

Une fois identifié, ladite borne peut indiquer à l'utilisateur que l'approvisionnement en électricité est autorisé. En somme, la prise, sur laquelle l'utilisateur connecte ou va connecter le câble d'alimentation 5 de son véhicule 3, est alimentée en électricité par le réseau. Cette indication peut être visuelle, notamment sous la forme d'un voyant lumineux coloré, notamment vert lorsque ladite prise est alimentée et rouge lorsqu'elle ne l'est pas.

Il est important de noter que c'est uniquement au moment où l'utilisateur connecte la batterie de son véhicule que le système effectue son traitement.

Ensuite, une fois le véhicule 3 connecté et l'alimentation électrique autorisée suite à l'identification de l'utilisateur, sa batterie 2 peut se recharger. Comme évoqué précédemment, ce rechargement s'effectue pendant une durée de chargement 7. A la fin de cette durée 7, l'approvisionnement a nécessité une certaine quantité d'électricité qui est enregistrée par le système 1 en vue de sa facturation à l'utilisateur.

Ainsi, le système 1 connaît, pour chaque batterie 2 d'un véhicule 3 d'un utilisateur, la quantité d'électricité consommée, sur une durée de charge 7 donnée entre un instant de début d'alimentation 70 et un instant de fin d'alimentation 71. En somme, le système 1 se limite à connaître uniquement les paramètres de consommation électrique du rechargement d'une batterie 2 d'un utilisateur, sans se soucier des caractéristiques propres à chaque véhicule et à chaque batterie 2, notamment son niveau actuel de charge et un niveau à atteindre.

De façon essentielle, l'invention prend en considération la durée de rechargement et le moment où elle a lieu, à savoir depuis un horaire de début jusqu'à un horaire de fin. Ces horaires permettent de connaître et déterminer des habitudes de charge des utilisateurs, en vue de déterminer leur probable durée de rechargement actuelle.

En outre, on notera que l'instant de fin d'alimentation 71 peut correspondre au moment où la batterie 2 est entièrement rechargée, ayant atteint son niveau de charge maximum, ou bien lorsque l'utilisateur déconnecte son véhicule en vue de l'utiliser, avant la fin du rechargement complet de sa batterie 2.

De plus, ces informations 9 peuvent être enregistrées pour chaque utilisateur et, de ce fait, relier toutes ces données de rechargement d'une batterie A,B,C,D à son utilisateur 30,31,32,33.

En particulier, cet enregistrement de données 9 peut s'effectuer au travers de moyens 8 d'enregistrement et de stockage adaptés, notamment sous forme d'une base de données relationnelles.

Avantageusement, le système de gestion 1 selon l'invention prévoit d'utiliser cet enregistrement de données 9, en vue de les traiter et de déterminer la durée prévisionnelle de rechargement de chaque véhicule et d'optimiser dans le temps les rechargements de plusieurs véhicules A,B,C,D.

Pour ce faire, le système 1 comprend des moyens 10 de traitement logiciel desdites données. Ces moyens 10 peuvent être intégrés au sein de ladite borne 60 ou bien reliés à cette dernière par l'intermédiaire d'un réseau de communication, notamment sans fil. De plus, lesdits moyens de traitement 10 sont reliés auxdits moyens d'enregistrement 8, afin de recevoir les enregistrements des données 9.

Ainsi, ces moyens de traitement 10 permettent pour chaque batterie 2, à partir d'au moins un enregistrement préalable de ses données 9, préférentiellement à partir d'une combinaison ou une moyenne de plusieurs de ses enregistrements préalables, de déterminer une durée prévisionnelle de rechargement, à partir d'un instant prévisionnel de début d'alimentation à un instant prévisionnel de fin d'alimentation.

Une fois déterminée, cette durée prévisionnelle est appliquée au rechargement dudit véhicule, à partir de l'instant prévisionnel de début d'alimentation qui devient alors l'instant réel de début d'alimentation 70, jusqu'à l'instant prévisionnel de fin d'alimentation. Une fois atteint, ce dernier devient l'instant réel de fin d'alimentation 71, correspondant à la fin de la durée de rechargement écoulée 7.

On notera que ce dernier peut être modifié à la fin ou au cours de la durée prévisionnelle réellement écoulée si, selon les cas, le système constate que la batterie semble être entièrement rechargée avant la fin de ladite durée, qu'elle ne l'est pas à la fin de la durée prévue, ou encore que l'utilisateur arrête volontairement le rechargement en cours et débranche son véhicule.

En particulier, pour détecter ledit instant de fin d'alimentation 71 de chaque batterie 2 lors de son rechargement, le système enregistre l'instant à partir du moment duquel le point d'alimentation 4 ne fournit plus d'électricité à ladite batterie 2. Cette coupure de la consommation électrique se traduit alors par le fait que la batterie 2 a atteint son niveau de charge maximal 21 et, ainsi, que sa durée de rechargement 7 est terminée.

Selon le mode préférentiel de réalisation, le système 1 prévoit de détecter l'absence de consommation électrique sur un laps de temps déterminé, après une consommation déjà existante. Ce laps de temps peut être de plusieurs minutes à plusieurs dizaines de minutes. Cette technique de détection permet de s'affranchir de coupures régulières commandées par les points d'approvisionnement 4 sur une durée de rechargement 7, afin d'assurer le maintien des batteries 2 à une température de charge qui ne les détériore pas. En somme, ces coupures régulières laissent le temps à chaque batterie 2 de se refroidir avant sa prochaine étape de charge. La durée de ces coupures dépend des batteries et des constructeurs, mais l'invention prévoit un laps de temps plus long, afin de bien déterminer la fin de la durée totale de charge 7 et non la fin d'une étape de charge partielle.

En outre, comme le système 1 selon l'invention permet de détecter l'instant de fin d'alimentation 71 du rechargement actuellement effectué, il peut alors le comparer à celui du rechargement prévisionnel. En particulier, si la consommation continue alors que l'instant prévisionnel de fin 71 est dépassé, alors le système 1 l'enregistre pour mettre à jour les données 9, en vue du prochain rechargement. En somme, le système 1 n'arrête pas le rechargement en cours, mais fait automatiquement évoluer la durée 7.

Ainsi, l'instant réel de fin d'alimentation est alors détecté et enregistré, modifiant la durée de chargement réellement écoulée, avant d'effectuer l'enregistrement de ces données 9 en vue de leur utilisation au moment des rechargements ultérieurs.

L'invention consiste aussi à déterminer un planning 11 de rechargement de plusieurs véhicules A,B,C,D en assemblant les durées prévisionnelles de rechargement déterminées pour chacune de leurs batteries 2. En somme, les moyens de traitement 10 appliquent le traitement susmentionné pour chaque véhicule A,B,C,D, en vue de déterminer une durée prévisionnelle d'alimentation pour chacun d'entre eux.

On notera que la détermination de cet échéancier ne nécessite pas que le véhicule soit présent, mais uniquement qu'il a déjà été rechargé au préalable, possédant un enregistrement de données 9 relatives à un précédent rechargement. Ainsi, l'invention détermine la planification des recharges des véhicules qui sont susceptibles de se connecter sur une plage temporelle donnée, par exemple une journée de vingt-quatre heures, une semaine de sept journées, etc.

Préférentiellement, l'ordonnancement dudit planning 11 peut être réalisé par calcul des besoins électriques nécessaires au rechargement de chaque batterie 2 sur sa durée prévisionnelle de rechargement, de sorte qu'à tout moment, le cumul desdites puissance n'excède pas la puissance nominale dudit point d'alimentation 4. En somme, cette optimisation prend en considération la puissance maximale que le point d'alimentation 4 ne doit pas atteindre, afin de rester fonctionnel et de ne pas se détériorer.

En référence à la figure annexée, représentant schématiquement un exemple non limitatif de l'architecture du système de gestion 1, quatre véhicules A, B, C et D sont connectés audit point d'alimentation 4. Chacun des quatre utilisateurs 30,31,32,33 des véhicules 3 correspondants s'est identifié auprès des moyens d'identification 6 et ont connecté électriquement leur véhicule respectif.

Le système 1 récupère les données 9 déjà enregistrées auprès des moyens d'enregistrement 8 pour chaque utilisateur et donc de chaque batterie 2, puis les traite par l'intermédiaire des moyens 10. Un échéancier 11 est alors déterminé dans lequel apparaissent des durées de rechargement 7 pour chaque véhicule A, B, C, D. Ces durées 7 se succèdent et se recouvrent au moins partiellement dans le temps. En particulier, pour chaque durée 7, le système 1 détermine un premier horaire correspondant à son instant de début d'alimentation 70.

De plus, en fonction des données 9, les moyens de traitement 10 déterminent un second horaire théorique correspondant à l'instant de fin d'alimentation 71 de chaque batterie 2. On notera que cet instant de fin d'alimentation 71 est alors prévisionnel, se basant sur un rechargement antérieur déjà réalisé. En effet, le système 1 ne connaît pas le niveau actuel de charge 20 de chaque batterie 2 et ne peut donc pas déterminer avec certitude cet instant de fin 71.

A ce titre, si des données 9 sont déjà enregistrées, alors le système 1 détermine automatiquement un échéancier 11, même si un unique véhicule est connecté et qu' aucun autre véhicule 3 n'est connecté au point d'alimentation 4, ou bien si tous les véhicules n'y sont pas connectés. En somme, l'invention prévoit que les véhicules absents peuvent être rechargés ultérieurement et l'envisage dans le planning 11 qu'il détermine et met à jour régulièrement.

Ainsi, le système de gestion selon l'invention peut apprendre des rechargements déjà effectués et des habitudes constatées, pour optimiser les plannings de rechargement à venir et les modifier en conséquence.

Plus particulièrement, les moyens de traitement 10 permettent de déterminer un ordre de rechargement de chaque véhicule A,B,C,D, en fonction desdites données 9 de rechargement préalable, conférant au système 1 un caractère prédictif.

Ainsi, en fonction des enregistrements des rechargements antérieurs de chaque véhicule A,B,C,D, il est possible de modifier le planning 11 et l'ordre de rechargement de chacun d'entre eux.

En particulier, il est possible d'avancer le rechargement d'un premier véhicule par rapport à un second véhicule, en fonction de leurs horaires d'arrivée et de départ antérieurement enregistrés. A titre d'exemple ; un premier véhicule arrivé plus tôt mais susceptible de repartir plus tard verra son rechargement retardé par rapport au second véhicule arrivé plus tard mais où il est constaté qu'il doit habituellement repartir plus tôt.

On notera que le système intègre la possibilité pour un utilisateur de passer outre l'ordonnancement de son rechargement, en lançant un rechargement forcé, qui lancera directement son rechargement, si ce rechargement forcé n'entre pas en conflit avec d'autres rechargements en cours, à savoir qu'il n'y a pas actuellement d'autres rechargements ou que les rechargements en train d'être effectués peuvent être décalés dans le temps, se succédant et se superposant autrement dans le temps, tout en respectant les horaires prévisionnels de fin de chaque rechargement.

Le système 1 selon l'invention présente un caractère intelligent d'apprentissage automatique, par rapport aux comportements et aux usages de charge de ses utilisateurs.

L'invention permet d'obtenir une amélioration moyenne d'au moins 30% de la durée totale de rechargement de tous les véhicules 3.

## Revendications

1. Procédé de gestion dynamique et prévisionnel du rechargement électrique de plusieurs véhicules (A,B,C,D) pourvus d'au moins une batterie rechargeable (2), appartenant chacun à un utilisateur (30, 31, 32, 33), rechargement s'effectuant à un point d'alimentation (4) localisé sur un seul site pourvu de plusieurs prises d'alimentation, procédé dans lequel lors de chaque rechargement:
- on identifie chaque utilisateur (30, 31, 32, 33) et/ou chaque véhicule (3) par des moyens d'identification (6) situés au niveau de l'unique point d'alimentation (4),
- on connecte électriquement la batterie (2) de chaque véhicule audit point d'alimentation (4) en vue de son rechargement,
- on récupère au moins un enregistrement antérieur de données (9) relatives au rechargement de chaque batterie (2) sous la forme d'une durée de charge (7) et le moment où elle a eu lieu s'étendant depuis un instant réel de début d'alimentation (70) jusqu'à un instant réel de fin d'alimentation (71), ainsi que d'une quantité d'électricité consommée pour le rechargement pendant cette durée de rechargement (7)
- on traite lesdites données (9) enregistrées et, à partir dudit traitement desdites données enregistrées, on détermine une durée prévisionnelle de rechargement de chaque batterie (2) des véhicules et/ou des utilisateurs préalablement identifiés et un horaire de rechargement prévisionnel s'étendant d'un instant prévisionnel de début d'alimentation jusqu'à un instant prévisionnel de fin d'alimentation et on ordonnance les durées prévisionnelles de rechargement déterminées pour chaque batterie (2) pour déterminer un planning de rechargement (11) desdits véhicules (A,B,C,D), lesdites durées (7) se succédant et se recouvrant au moins partiellement dans le temps, et
- on recharge les batteries (2) de chaque véhicule audit point d'alimentation, conformément au planning de rechargement (11) qui a été déterminé, en appliquant chaque durée prévisionnelle au rechargement de chaque véhicule (A,B,C,D), à partir de son instant prévisionnel de début d'alimentation et qui devient alors son instant réel de début d'alimentation (70), jusqu'à un instant de fin d'alimentation, qui correspond ou non à son instant prévisionnel de fin d'alimentation qui devient alors son instant réel de fin d'alimentation,
- on enregistre au niveau du point d'alimentation (4), pour chaque utilisateur (30, 31, 32, 33) et/ou chaque véhicule (3), la durée de charge (7) et le moment où elle a lieu s'étendant depuis un instant réel de début d'alimentation (70) jusqu'à un instant réel de fin d'alimentation (71), ainsi que la quantité d'électricité consommée pour le rechargement pendant cette durée de rechargement (7) pour obtenir un enregistrement de données (9) relatives à un rechargement de chaque batterie (2), et
- lors du rechargement d'une batterie (2), on définit l'instant de fin d'alimentation après un laps de temps prédéfini suivant l'arrêt de consommation d'électricité par ladite batterie (2).

2. Procédé de gestion selon la revendication 1, **caractérisé en ce que** l'ordonnancement dudit planning (11) est réalisé par calcul des puissances électriques nécessaires au rechargement de chaque batterie (2) pendant sa durée prévisionnelle de rechargement, de sorte qu'à tout moment, le cumul desdites puissances n'excède pas la puissance nominale dudit point d'alimentation (4).

3. Procédé de gestion selon l'une quelconque des revendications précédentes, **caractérisé en ce que** l'identification dudit utilisateur (3) consiste en son authentification et à relier ses informations personnelles audit enregistrement de données.

## Patentansprüche

1. Dynamisches und vorausschauendes Verwaltungsverfahren der elektrischen Aufladung von mehreren, mit mindestens einer aufladbaren Batterie (2) ausgestatteten Fahrzeugen (A, B, C, D), die jeweils einem Benutzer (30, 31, 32, 33) gehören, wobei die Aufladung an einem Versorgungspunkt (4) erfolgt, der an einem einzigen Standort lokalisiert ist, der mit mehreren Versorgungssteckdosen ausgestattet ist, wobei bei dem Verfahren bei jeder Aufladung:
- jeder Benutzer (30, 31, 32, 33) und/oder jedes Fahrzeug (3) durch Identifikationsmittel (6) identifiziert wird, die sich im Bereich des einzigen Versorgungspunktes (4) befinden,
- die Batterie (2) jedes Fahrzeugs mit dem Versorgungspunkt (4) zwecks seiner Aufladung elektrisch verbunden wird,
- mindestens eine frühere Aufzeichnung von Daten (9), die sich auf die Aufladung jeder Batterie (2) in Form einer Ladedauer (7) und den Moment, in dem sie stattfand, der sich ab einem tatsächlichen Augenblick des Versorgungsbeginns (70) bis zu einem tatsächlichen Augenblick des Versorgungsendes (71) erstreckt, sowie einer für die Aufladung während dieser Aufladedauer (7) verbrauchten Strommenge bezieht, wiederverwendet wird,
- die aufgezeichneten Daten (9) verarbeitet werden und auf der Basis der Verarbeitung der aufgezeichneten Daten eine voraussichtliche Aufladedauer jeder Batterie (2) der zuvor identifizierten Fahrzeuge und/oder der Benutzer und eine voraussichtliche Aufladezeit bestimmt werden, die sich ab einem voraussichtlichen Augenblick des Versorgungsbeginns bis zu einem voraussichtlichen Augenblick des Versorgungsendes erstrecken und die bestimmten voraussichtlichen Aufladedauern für jede Batterie (2) angewiesen werden, um einen Aufladezeitplan (11) der Fahrzeuge (A, B, C, D) zu bestimmen, wobei die Dauern (7) aufeinanderfolgen und sich in der Zeit mindestens zum Teil überlappen, und
- die Batterien (2) jedes Fahrzeugs am Versorgungspunkt gemäß dem Aufladezeitplan (11) aufgeladen werden, der bestimmt wurde, bei Anwendung jeder voraussichtlichen Dauer auf die Aufladung jedes Fahrzeugs (A, B, C, D) ab seinem voraussichtlichen Augenblick des Versorgungsbeginns und der dann sein tatsächlicher Augenblick des Versorgungsbeginns (70) wird, bis zu einem Augenblick des Versorgungsendes, der seinem voraussichtlichen Augenblick des Versorgungsendes entspricht oder nicht, der dann sein tatsächlicher Augenblick des Versorgungsendes wird,
- im Bereich des Versorgungspunktes (4) für jeden Benutzer (30, 31, 32, 33) und/oder jedes Fahrzeug (3) die Ladedauer (7) und der Moment aufgezeichnet werden, in dem sie stattfindet, sich erstreckend ab einem tatsächlichen Augenblick des Versorgungsbeginns (70) bis zu einem tatsächlichen Augenblick des Versorgungsendes (71), sowie die für die Aufladung während dieser Aufladedauer (7) verbrauchte Strommenge, um eine Aufzeichnung von Daten (9) zu erhalten, die sich auf eine Aufladung jeder Batterie (2) beziehen, und
- bei der Aufladung einer Batterie (2) der Augenblick des Versorgungsendes nach einer vorher festgelegten Zeitspanne nach der Einstellung des Stromverbrauchs durch die Batterie (2) festgelegt wird.

2. Verwaltungsverfahren nach Anspruch 1, **dadurch gekennzeichnet, dass** die Anweisung des Zeitplans (11) durch Berechnung der für die Aufladung jeder Batterie (2) während ihrer voraussichtlichen Aufladedauer notwendigen elektrischen Leistungen berechnet wird, so dass die Kumulation der Leistungen zu jedem Moment die Nennleistung des Versorgungspunktes (4) nicht überschreitet.

3. Verwaltungsverfahren nach einem der vorangehenden Ansprüche, **dadurch gekennzeichnet, dass** die Identifizierung des Benutzers (3) in seiner Authentifizierung und Verbindung seiner persönlichen Daten mit der Datenaufzeichnung besteht.

## Claims

1. A method for dynamic and provisional management of the electric recharging of several vehicles (A,B,C,D) provided with at least one rechargeable battery (2), each belonging to a user (30, 31, 32, 33), the recharging being done at a supply point (4) located on a single site provided with several power sockets, in which method, during each recharge:
- each user (30, 31, 32, 33) and/or each vehicle (3) is identified by identification means (6) located at the single supply point (4),
- the battery (2) of each vehicle is electrically connected to said supply point (4) for recharging thereof,
- at least one prior data recording (9) is recovered relative to the recharging of each battery (2) in the form of a charging duration (7) and the moment where it took place extending from an actual beginning of supply moment (70) to an actual end of supply moment (71), as well as a quantity of electricity consumed for the recharging during this recharging duration (7),
- said recorded data (9) is processed and, from said processing of said recorded data, a provisional recharging duration of each battery (2) and/or of users previously identified is determined as well as a provisional recharging schedule extending from a provisional beginning of supply moment to a provisional end of supply moment, and the provisional recharging durations determined for each battery (2) are sequenced in order to determine a recharging schedule (11) of said vehicles (A,B,C,D), said durations (7) following one another and overlapping one another at least partially over time, and
- the batteries (2) of each vehicle are recharged at said supply point, according to the recharging schedule (11) that has been determined, by applying each provisional recharging duration of each vehicle (A,B,C,D), from its provisional beginning of supply moment and which then becomes its actual beginning of supply moment (70), until an end of supply moment, which does or does not correspond to its provisional end of supply moment, which then becomes its actual end of supply moment,
- the charging duration (7) and the moment where it takes place, extending from an actual beginning of supply moment (70) to an actual end of supply moment (71), as well as the quantity of electricity consumed for the recharging during this recharging duration (7), are recorded at the supply point (4), for each user (30, 31, 32, 33) and/or each vehicle (3), in order to obtain a data recording (9) relative to a recharging of each battery (2), and
- during the recharging of a battery (2), the end of supply moment is defined after a predefined length of time following the stopping of electricity consumption by said battery (2).

2. The management method according to claim 1, **characterized in that** the sequencing of said schedule (11) is done by computing electrical powers necessary for the recharging of each battery (2) during its provisional recharging duration, such that at any moment, the accumulation of said powers does not exceed the nominal power of said supply point (4).

3. The management method according to any one of the preceding claims, **characterized in that** the identification of said user (3) consists of his authentication and linking his personal information to said data recording.
